(19) Europäisches Patentamt

European Patent Office

Office européen des brevets

(11) **EP 1 605 706 A2**

(12) **EUROPEAN PATENT APPLICATION**

(43) Date of publication:
**14.12.2005 Bulletin 2005/50**

(51) Int Cl.$^7$: **H04N 7/34**

(21) Application number: **05011270.5**

(22) Date of filing: **24.05.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventors:<br>• **Drezner David c/o Broadcom Corporation Irvine California 92618-7013 (US)**<br>• **Kojokaro, Gideon Ramat Hasharon (IL)** |
| (30) Priority: **09.06.2004 US 578065 P** | (74) Representative: **Jehle, Volker Armin Bosch, Graf v. Stosch, Jehle Patentanwalt GmbH Flüggenstrasse 13 80639 München (DE)** |
| (71) Applicant: **Broadcom Corporation Irvine, CA 92618-7013 (US)** | |

(54) **Advanced video coding (AVC) intra prediction scheme**

(57) A system and method are disclosed for efficiently determining a prediction block for a current block of interest in a video signal encoding protocol. In a preferred embodiment, this is achieved by determining whether there is a correlation between the intra 4x4 predictions and the 16x16 prediction modes. If the correlation to the 16x16 prediction modes is lower than a predetermined threshold value, then the additional prediction blocks using 16x16 intra luma prediction are not calculated. If the correlation to the 16x16 prediction modes is higher than the predetermined threshold value, then the additional prediction blocks are calculated using 16x16 intra luma prediction. A cost function may then be used to determine the predicted bit cost of each prediction block, and the prediction block with the lowest cost may be selected as the prediction block for the current block of interest.

FIG 3

```
                        Start
                          │
            ┌─────────────▼─────────────┐
            │ Calculate prediction blocks│
            │   for all 4x4 intra luma   │──── 302
            │     prediction modes       │
            └─────────────┬─────────────┘
                          │
            ┌─────────────▼─────────────┐
            │ Determine correlation between│
            │    4x4 prediction directions │──── 304
            │ and 16x16 prediction directions│
            └─────────────┬─────────────┘
              306         │
                ┌─────────▼─────────┐
                │   Is correlation  │  No (low correlation)
                │ larger than 16x16 intra├──────────────────┐
                │   luma prediction │                  │
                │     threshold?    │                  │
                └─────────┬─────────┘                  │
                   Yes    │                            │
              (high correlation)                       │
            ┌─────────────▼─────────────┐   ┌──────────▼──────────┐
     308 ───│ Calculate prediction blocks│   │     Skip 16x16      │
            │    for all 16x16 intra      │   │     intra luma      │──── 314
            │   luma prediction modes     │   │     prediction      │
            └─────────────┬─────────────┘   └──────────┬──────────┘
                          │                            │
            ┌─────────────▼─────────────┐   ┌──────────▼──────────┐
     310 ───│  Determine cost for each   │   │     Determine       │
            │ prediction block for 4x4 and│   │   cost for each     │──── 316
            │   16x16 prediction modes   │   │  prediction block   │
            └─────────────┬─────────────┘   └──────────┬──────────┘
                          │                            │
            ┌─────────────▼─────────────┐   ┌──────────▼──────────┐
            │  Select prediction block   │   │ Select prediction block│
     312 ───│ from 4x4 or 16x16 prediction│   │  from 4x4 prediction │──── 318
            │  modes with lowest cost    │   │ modes with lowest cost│
            └───────────────────────────┘   └─────────────────────┘
```

**Description**

**RELATED APPLICATIONS**

This application claims priority from U.S. provisional application No. _____ filed on June 9, 2004 by David Drezner and entitled "Advanced Video Coding Intra Prediction Scheme" which is incorporated by reference herein in its entirety.

**FIELD OF THE INVENTION**

The present invention relates generally to compression of digital video signals, and specifically to a system and method for an Advanced Video Coding intra prediction scheme. More specifically, the present invention relates to a system and method for determining whether or not to perform 16×16 intra luma prediction for a current block of interest.

**BACKGROUND OF THE INVENTION**

Digital video and video/audio products and services such as video telephone, teleconference, digital television systems and the like, and devices for storage and retrieval of video/audio streams on the Internet are ubiquitous in the marketplace. Due to limitations in digital signal storage capacity and limitations in network and broadcast bandwidth, compression of digital video signals is essential to digital video storage and transmission. As a result, many standards for compression and encoding of digital video and video/audio signals have been promulgated. These standards specify with particularity the form of encoded digital video signals and how such signals are to be decoded for presentation to a viewer.

Compression is made possible by virtue of a high degree of redundancy both within each image frame and between consecutive image frames of the video signal. In other words, one image frame may differ only slightly from the preceding image frame(s), or one portion of an image frame may differ only slightly from another portion of the same image frame. The redundancy allows certain portions of an image frame to be extrapolated or predicted based on the preceding image frames or the preceding portions within the same image frame. Consequently, the amount of information in the video signal that actually needs to be transmitted may be substantially reduced.

A number of encoding standards have been developed to help standardize the transmission of video and audio signals over low bandwidth media. One example of such a standard is ITU-T Recommendation H.264 and ISO Standard MPEG-4 Part 10, "Advanced Video Coding" (hereinafter "AVC") which is designed to provide a visual coding standard for allowing content-based interactivity, improved coding efficiency and universal accessibility in such applications as low-bit rate communications, interactive multimedia (e.g. games, interactive TV and the like) and surveillance.

Under such standards, the high degree of content redundancy within an image frame and between consecutive image frames allows a block to be extrapolated or predicted based on the surrounding or neighboring blocks. More specifically, the redundancy allows for prediction of pixels or of DCT coefficients or other transform coefficients that are used in the encoding scheme to represent the color and luminance of the pixels in the blocks. The motion of the pixels may also be predicted based on this redundancy. In general, the larger the amount of information that can be used for prediction, the more accurate the prediction of the pixels in a block will be, and hence the residual prediction error will be smaller and cheaper to encode, resulting in higher compression ratio and higher quality of the transmitted video for a given bitrate constraint.

Intra coding refers to the case where only spatial redundancies within a video frame are exploited. INTRA coding may be used in any frame type (I , P , B frame) as an alternative to INTER coding. I-pictures are typically encoded (in the previous standards without INTRA prediction) by directly applying the transform to the different macroblocks in the frame. As a consequence, encoded I-pictures are large in size since a large amount of information is usually present in the frame.

If a macroblock is encoded in intra mode, a prediction block is formed based on previously encoded and reconstructed blocks (already coded macroblocks located on top and to the left of the current macroblock of interest). This prediction block P is subtracted from the current block of interest prior to encoding. For the luminance (luma) samples, P may be formed for each 4x4 sub-block or for a 16x16 macroblock. There are a total of nine optional prediction modes for each 4x4 luma block and four optional modes for a 16x16 luma block.

**4x4 Intra luma prediction**

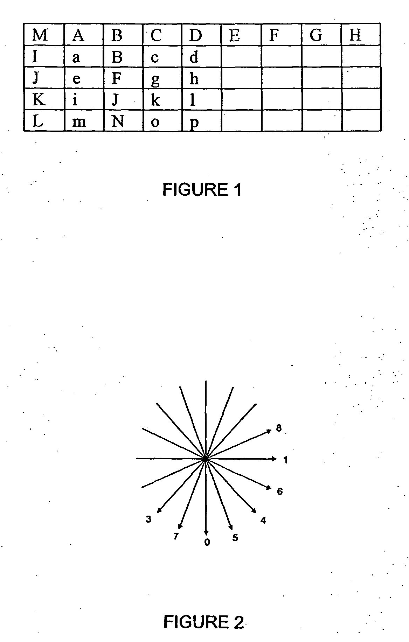

Referring now to Figure 1, there is shown a sample data block labeled A to M. The first six modes divide the 16×16 block to 16 4x4 sub-blocks. The pixels in each sub-block are labeled accordingly:

1) Lower-case letters are the pixels in the sub-block to be coded.

2) Upper-case letters are the pixels in the neighboring sub-blocks that have already been coded.

Referring now to Figure 2, there is shown arrows which indicate the direction of prediction in each mode. For modes 3 to 8, the predicted samples are formed from a weighted average of the prediction samples A to M.

For example, if Mode 1 (horizontal prediction) is selected, then the values of the pixels "a" to "p" are assigned as follows:

a, b, c, d, are equal to I,

e, f, g, h, are equal to J,

i, j, k, I, are equal to K,

m, n, o, and p are equal to L.

In the case where Mode 0 (Vertical prediction) is selected, then the values of the pixels "a" to "p" are assigned as follows:

a, b, c, d, are equal to A,

e, f, g, h, are equal to B,

I, j, k, I, are equal to C,

m, n, o, and p are equal to D.

In the case where Mode 3 (Diagonal_Down_Left prediction) is chosen, the values of "a" to "p" are given as follows:

a is equal to $(A+2B+C+2)/4$,

b and e are equal to $(B+2C+D+2)/4$,

c, f and i are equal to $(C+2D+E+2)/4$,

d, g and j are equal to $(D+2E+F+2)/4$,

h, k and n are equal to $(E+2F+G+2)/4$,

I and o are equal to $(F+2G+H+2)/4$,

p is equal to $(G+3H+2)/4$.

After a prediction block P has been created by each of the nine prediction modes for a given 4x4 block, the magnitude of the prediction error is typically determined. For example, the Sum of Absolute Errors (SAE) may be used to indicate the magnitude of the prediction error for each prediction block P resulting from each prediction mode. The prediction block P which gives the smallest prediction error is determined to be the best match to the actual current block of interest.

**16x16 Intra luma prediction**

An alternative to the 4x4 luma prediction modes described above is the prediction of the entire 16×16 luma component of a macroblock. Four prediction modes (DC, Vertical Horizontal and Planar) are available with 16×16 intra coding. This alternative is preferably used for regions with less spatial detail (i.e. flat regions).

Calculating a prediction block for each mode (9 prediction modes for 4x4 and 4 modes for 16×16) for a given block of interest and determining the magnitude of the prediction error for each prediction block requires significant processing power and time. Therefore, what is need is a system and method that will determine more efficiently the best intra luma prediction mode to use to produce the best match for the current block of interest.

Further limitations and disadvantages of conventional and traditional approaches will become apparent to one of skill in the art, through comparison of such systems with the present invention as set forth in the remainder of the present application with reference to the drawings.

## SUMMARY OF THE INVENTION

The present invention comprises a system and method substantially as shown in and/or described in connection with at least one of the figures, as set forth more completely in the claims.

According to an aspect of the invention, a method for determining a prediction block for a current block of interest is provided, the method comprising the steps of:

determining the correlation between 4x4 intra luma prediction directions; and

depending on the determined correlation, either calculating additional prediction blocks using 16x16 intra luma prediction or skipping the 16x16 intra luma prediction calculations.

Advantageously, the additional prediction blocks are calculated using 16x16 intra luma prediction if the correlation between 4x4 intra luma prediction directions is high.

Advantageously, the correlation is high if it is larger than a predetermined threshold value.

Advantageously, the additional prediction blocks using 16×16 intra luma prediction are not calculated if the correlation between 4x4 intra luma prediction directions is low.

Advantageously, the correlation is low if it is smaller than a predetermined threshold value.

Advantageously, the method further comprises the step of
using a cost function to determining the predicted bit cost of each prediction block.

Advantageously, the method further comprises the steps of

determining the prediction block with the lowest cost; and

selecting the prediction block with the lowest cost.

According to an aspect of the invention, a method for predicting an intra-code block for a current block of interest in a video signal encoding protocol is provided, the method comprising the steps of:

determining the intra 4x4 predictions for the current block of interest; and

determining a correlation between the intra 4x4 predictions to the 16x16 prediction modes.

Advantageously, the method further comprises the step of:

if there is a low correlation between the intra 4x4 predictions to the 16x16 prediction modes, then the 16×16 intra luma predictions for the current block of interest are not calculated.

Advantageously, the method further comprises the steps of:

calculating the cost of each 4x4 prediction block; and

selecting the 4x4 prediction block with the lowest cost as the prediction block for the current block of interest.

Advantageously, the method further comprises the steps of:

If there is a high correlation between the intra 4x4 predictions to the 16x16 prediction modes, then the 16x16 intra luma predictions for the current block of interest are calculated.

Advantageously, the method further comprises the steps of:

Calculating the cost for each 4x4 prediction block;

Calculating the cost for each 16x16 prediction block; and

Selecting either the 4x4 or 16x16 prediction block with the lowest cost as the prediction block for the current block of interest.

According to an aspect of the invention, a system for determining a prediction block for a current block of interest is provided, the system comprising;

a correlation detector for detecting the correlation between 4x4 intra luma prediction directions; and

a 16x16 intra luma prediction determinator for calculating additional prediction blocks using $16{\times}16$ intra luma prediction;

wherein the additional prediction blocks using $16{\times}16$ intra luma prediction are calculated only if the correlation between the 4x4 intra luma directions is high and where the additional prediction blocks using 16x16 intra luma prediction are not calculated if the correlation between the 4x4 intra luma directions is low.

Advantageously, the correlation between 4x4 intra luma prediction blocks is high if the correlation is larger than a predetermined $16{\times}16$ Intra Luma Prediction Threshold.

Advantageously, the correlation between 4x4 intra luma prediction blocks is low if the correlation is smaller than a predetermined $16{\times}16$ Intra Luma Prediction Threshold.

Advantageously, the system further comprises:

a coding complexity analyzer for determining the cost function for a given prediction block.

Advantageously, the coding complexity analyzer determines the predicted bit cost for a given prediction block.

Advantageously, the prediction block with the lowest cost function is selected as the prediction block for coding the current block of interest.

## BRIEF DESCRIPTION OF SEVERAL VIEWS OF THE DRAWINGS

The accompanying drawings, which are incorporated herein and form a part of the specification, illustrate the present invention and, together with the description, further serve to explain the principles of the invention and to enable a person skilled in the pertinent art to make and use the invention.

Figure 1 illustrates a sample data block labeled A to M.

Figure 2 illustrates the direction of the prediction modes for intra luma prediction.

Figure 3 is a flow chart illustrating the steps for determining a prediction block in accordance with one embodiment of the present invention.

Figure 4 is a flow chart illustrating the steps for determining correlation between the 4x4 prediction directions and the 16x16 prediction modes in accordance with one embodiment of the present invention.

Figure 5 is a block diagram illustrating a system in accordance with one embodiment of the present invention.

## DETAILED DESCRIPTION OF THE INVENTION

The present invention will now be described in detail with reference to a few preferred embodiments thereof as illustrated in the accompanying drawings. In the following description, numerous specific details are set forth in order to provide a thorough understanding of the present invention. It will be apparent, however, to one skilled in the art, that the present invention may be practiced without some or all of these specific details. In other instances, well known processes and steps have not been described in detail in order not to unnecessarily obscure the present invention.

The invention generally pertains to predicting intra-coded blocks in a video signal encoding protocol, such as in an Advanced Video Coding ("AVC") system. More particularly, the invention pertains to an improved system and method for determining a prediction block for a current block of interest. If there is a high correlation between the intra 4x4 prediction directions, most of them to horizontal, vertical or DC, then the present invention performs intra prediction of 16x16 and a cost function to determine if the 16x16 intra prediction should be used. If the cost of 16x16 intra prediction is less then all 4x4 intra prediction modes plus their overhead signaling mode costs, then the present invention can save mode overhead by changing all the selected 16x (intra prediction 4x4) to one $16\times16$ intra prediction mode (set16x16 mode to founded correlated direction). If the correlation to the 16x16 prediction modes is lower than the predetermined threshold value, then the additional prediction blocks using 16x16 intra luma prediction are not calculated.

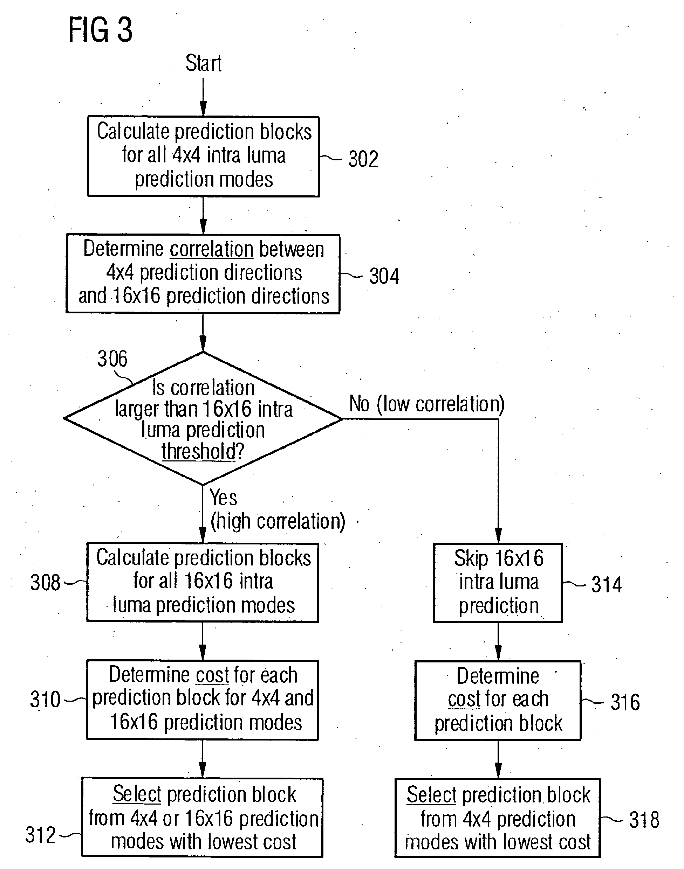

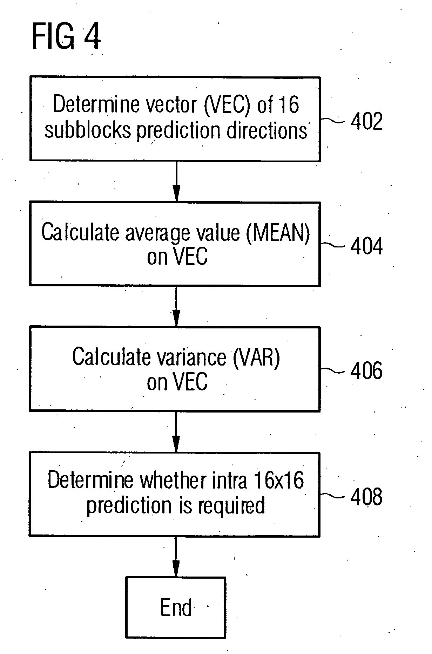

Referring now to Figure 3, there is shown a flow chart illustrating the steps for determining a prediction block for a current block of interest in accordance with one embodiment of the present invention. First, prediction blocks for all 4x4 intra luma prediction modes are calculated at step 302. Then, at step 304, the correlation between the 4x4 prediction directions is calculated. The steps for calculating the correlation between the 4x4 prediction directions is described in more detail with reference to Figure 4.

The correlation is then compared to a predetermined threshold value at step 306. If the correlation is larger than the predetermined threshold value, then there is considered to be a high correlation between the 4x4 intra prediction directions. If the correlation is equal to or lower than the predetermined threshold value, then there is considered to be a low correlation between the 4x4 intra prediction directions. One skilled in the art will realize that the present invention is not limited to this convention for determining whether the correlation is high or low but that any relation or reference to the predetermined threshold value may be used to determine a high or low correlation.

If there is a high correlation between the 4x4 intra luma prediction directions and the 16x16 prediction modes, then the prediction blocks for all 16x16 directions is calculated at step 308. At step 310, the cost for each 4x4 prediction block and for each 16x16 prediction block is then determined and analyzed. The 4x4 prediction block or $16\times16$ prediction block with the lowest cost is selected, at step 312, as the prediction block for the current block of interest.

If there is a low correlation between the 4x4 intra luma prediction directions, then the present invention skips, at step 314, the $16\times16$ intra luma predictions for the current block of interest. At step 316, the cost for each 4x4 prediction block is determined and analyzed, and the 4x4 prediction block with the lowest cost is selected, at step 318, as the prediction block for the current block of interest. Thus, the present invention improves efficiency by skipping the prediction process for $16\times16$ data blocks when the prediction process for 4x4 data blocks is not correlated in the $16\times16$ directions. The result is a method which saves processing power and time.

As will be appreciated by one skilled in the art, various methods may be used for calculating cost for the various prediction blocks. In one embodiment, cost (COST) may be calculated using the following equation:

$$ResidualSubBlock = CurrentSubBlock - PredictedIntraSubBlock$$

In another embodiment, VAR COST may be calculated to determine the cost of a given prediction block. In this embodiment, the SubBlockCost may be determined by calculating VAR in the same way as described above on each ResidualSubBlock of 4x4 = total 16 pixels (VEC len=16). The macroblock cost (MB COST) may then be determined by calculating the sum of all SubBlockCost (total of 16 VAR) plus the direction overhead (if the direction is changing from subblock to subblock).

In yet another embodiment, the Weighted Sum of Absolute Transformed Differences cost (WSATD COST) may be used to calculate the cost of a given prediction block. In this embodiment, the well known Hadamart 4x4 transform may be performed on each ResidualSubBlock. The Wtransform is then determined by multiplying transform coefficients by cost matrix (dot by dot Multiply/Array multiply): TransformVal(I,J) x CostMatrix(I,J). The SubBlockCost is then determined by performing the sum of absolute WTransform coefficients, and the macroblock cost (MB COST) is determined by calculating the sum of all the SubBlockCost (total of 16 VAR) plus direction overhead (if the direction is changing from subblock to subblock).

In calculating the correlation between the 4x4 prediction directions, different known correlation methods may be applied. Referring now to Figure 4, there is shown a flow chart illustrating the steps for determining correlation between the 4x4 prediction directions and the 16x16 prediction directions in accordance with one embodiment of the present invention. At step 402, the vector of the 16 subblocks prediction directions (VEC) is calculated. In one embodiment, a mapping function between the standard 4x4 directions and the intra prediction correlation of the present invention is used. Preferably, the mapping function is defined by the following: standard 4x4 intra direction $3\rightarrow$ correlator of the present invention using 0 value: $7\rightarrow1$, $0\rightarrow2$, $5\rightarrow3$, $4\rightarrow4$, $6\rightarrow5$, $1\rightarrow6$, $8\rightarrow7$.

At step 404, the average value (MEAN) of VEC is then calculated. Thus,

$$MEAN = (1/16) \times \sum VEC(i).$$

Then the variance (VAR) of VEC is calculated at step 406. Thus,

$$VAR \{E(X^2)-E(X)^2\}= (1/16) \times \sum ( VEC(i)^2 ) - (1/256) \times (\Sigma VEC(i)^2.$$

At step 408, the correlation values MEAN and VAR are then used to determine whether intra 16x16 prediction is needed. In accordance with one embodiment of the present invention, if the MEAN value is in the horizontal, vertical or DC direction, and VAR is lower than a predetermined threshold value, then 16x16 prediction in the MEAN direction is performed. If the MEAN value is not in the horizontal, vertical or DC direction or VAR is greater than a predetermined threshold value, then no 16x16 prediction is performed. In one embodiment, the predetermined threshold value is determined using a trial and error experimental process. In a preferred embodiment, the predetermined threshold value equals 2. Thus, the present invention improves efficiency and saves processing power by skipping the prediction process for $16\times16$ data blocks when the prediction process for 4x4 data blocks is not correlated in 16x16 directions.

In another embodiment, further performance cost savings may be achieved by using non reconstructed surrounded sub block coefficients in the 4x4 cost evaluation and correlation stage. First, the preferred direction of the intra coding mode must be determined. Then; the decision whether to use intra or inter coding mode (valid only in P, B frames) must be made. In the case when intra prediction is chosen, the reconstructed surrounding sub blocks for the coding is used. If inter coding mode is determined to have a lower macro block cost, then much of the reconstructed calculation is spared. In a preferred embodiment, reconstructed calculation refers to full coding of the 4x4 subblock, i. e. integer transform $(4\times4) \rightarrow$ quantization $\rightarrow$ inverse quantization $\rightarrow$ inverse integer transform (4x4).

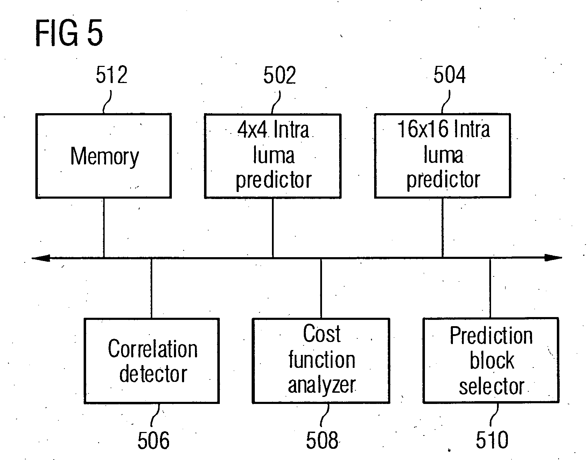

Referring now to Figure 5, there is shown a block diagram of a system 500 for determining a prediction block for a current block of interest. In a preferred embodiment, system 500 may be implemented in a BCM7034 device, produced by Broadcom Corporation of Irvine, California, to implement its various functions. System 500 comprises a 4x4 intra luma predictor 502 for calculating 4x4 prediction blocks for the current block of interest, a $16\times16$ intra luma predictor 504 for calculating $16\times16$ prediction blocks for the current block of interest if required, a correlation detector 506 for determining the correlation between the 4x4 prediction directions and the 16x16 prediction directions and comparing the correlation to a predetermined threshold value, a cost function analyzer 508 for determining the cost for each of the calculated prediction blocks, and a prediction block selector 510 for selecting a prediction block based on the lowest cost. The system 500 also includes a memory 512 for storing block, macroblock, and prediction block information.

As already described above, system 500 calculates prediction blocks using $16\times16$ intra luma prediction only if the correlation between the 4x4 intra luma directions is high (i.e. greater than a predetermined threshold value). Prediction blocks using $16\times16$ intra luma prediction are not calculated if the correlation between the 4x4 intra luma directions is low (i.e. smaller than a predetermined threshold value).

While the invention has been described with reference to certain embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiment disclosed, but that the invention will include all embodiments falling within the scope of the appended claims.

**Claims**

1. A method for determining a prediction block for a current block of interest, the method comprising the steps of:

   determining the correlation between 4x4 intra luma prediction directions; and

   depending on the determined correlation, either calculating additional prediction blocks using 16x16 intra luma prediction or skipping the $16\times16$ intra luma prediction calculations.

2. The method of claim 1 wherein the additional prediction blocks are calculated using 16x16 intra luma prediction if the correlation between 4x4 intra luma prediction directions is high.

3. The method of claim 1 wherein the correlation is high if it is larger than a predetermined threshold value.

4. The method of claim 1 wherein the additional prediction blocks using $16\times16$ intra luma prediction are not calculated if the correlation between 4x4 intra luma prediction directions is low.

5. A method for predicting an intra-code block for a current block of interest in a video signal encoding protocol, the method comprising the steps of:

    determining the intra 4x4 predictions for the current block of interest; and

    determining a correlation between the intra 4x4 predictions to the 16x16 prediction modes.

6. The method of claim 5 further comprising the step of:

    if there is a low correlation between the intra 4x4 predictions to the $16 \times 16$ prediction modes, then the 16x16 intra luma predictions for the current block of interest are not calculated.

7. The method of claim 6 further comprising the steps of:

    calculating the cost of each 4x4 prediction block; and

    selecting the 4x4 prediction block with the lowest cost as the prediction block for the current block of interest.

8. A system for determining a prediction block for a current block of interest, the system comprising;

    a correlation detector for detecting the correlation between 4x4 intra luma prediction directions; and

    a 16x16 intra luma prediction determinator for calculating additional prediction blocks using $16 \times 16$ intra luma prediction;
       wherein the additional prediction blocks using $16 \times 16$ intra luma prediction are calculated only if the correlation between the 4x4 intra luma directions is high and where the additional prediction blocks using $16 \times 16$ intra luma prediction are not calculated if the correlation between the 4x4 intra luma directions is low.

9. The system of claim 8 wherein the correlation between 4x4 intra luma prediction blocks is high if the correlation is larger than a predetermined 16x16 Intra Luma Prediction Threshold.

10. The system of claim 8 wherein the correlation between 4x4 intra luma prediction blocks is low if the correlation is smaller than a predetermined 16x16 Intra Luma Prediction Threshold.

| M | A | B | C | D | E | F | G | H |
|---|---|---|---|---|---|---|---|---|
| I | a | B | c | d | | | | |
| J | e | F | g | h | | | | |
| K | i | J | k | l | | | | |
| L | m | N | o | p | | | | |

FIGURE 1

FIGURE 2

# FIG 3

Start

↓

Calculate prediction blocks
for all 4x4 intra luma
prediction modes          ~ 302

↓

Determine <u>correlation</u> between
4x4 prediction directions
and 16x16 prediction directions          ~ 304

↓

306

Is correlation
larger than 16x16 intra
luma prediction
threshold?          No (low correlation) →

Yes
(high correlation)

↓                                        ↓

308 ~ Calculate prediction blocks
for all 16x16 intra
luma prediction modes

Skip 16x16
intra luma
prediction          ~ 314

↓                                        ↓

310 ~ Determine <u>cost</u> for each
prediction block for 4x4 and
16x16 prediction modes

Determine
<u>cost</u> for each
prediction block          ~ 316

↓                                        ↓

312 ~ <u>Select</u> prediction block
from 4x4 or 16x16 prediction
modes with lowest cost

<u>Select</u> prediction block
from 4x4 prediction
modes with lowest cost          ~ 318

# FIG 4

```
┌─────────────────────────────────┐
│  Determine vector (VEC) of 16   │
│  subblocks prediction directions│ ─── 402
└─────────────────────────────────┘
                 │
                 ▼
┌─────────────────────────────────┐
│  Calculate average value (MEAN) │
│             on VEC              │ ─── 404
└─────────────────────────────────┘
                 │
                 ▼
┌─────────────────────────────────┐
│     Calculate variance (VAR)    │
│             on VEC              │ ─── 406
└─────────────────────────────────┘
                 │
                 ▼
┌─────────────────────────────────┐
│  Determine whether intra 16x16  │
│      prediction is required     │ ─── 408
└─────────────────────────────────┘
                 │
                 ▼
          ┌──────────────┐
          │     End      │
          └──────────────┘
```

# FIG 5